# EUROPEAN PATENT APPLICATION

(11) **EP 2 157 580 A1**
(43) Date of publication of application: **24.02.2010**
(21) Application number: 09167674.2
(22) Date of filing: 12.08.2009
(51) Int. Cl.: G11B 20/00, G11B 20/10, G11B 27/034, G11B 27/28, H04N 5/76, H04N 7/16

(54) **Video editing system**

(30) Priority: 22.08.2008 JP 2008213778
(71) Applicant: Panasonic Corporation, Kadoma-shi Osaka 571-8501 (JP)
(72) Inventor: Kinkaa, Minoru, Osaka-shi Osaka 540-6207 (JP)
(74) Representative: Grünecker, Kinkeldey, Stockmair & Schwanhäusser Anwaltssozietät

(57) **Abstract**

According to the present invention, a change point between a content portion and a non-content portion is located by finding an audio gap in given audio data. As a parameter for locating the content/non-content change point, global_gain of the AAC standard is used. Then, the content/non-content change point can be located without decoding audio data.

## Description

### BACKGROUND OF THE INVENTION

### 1. Field of the Invention:

The present invention relates to a video editing system and more particularly relates to a video editing system that records content editing points.

### 2. Description of the Related Art:

Some TV broadcast receivers are designed so as to be able to put editing points where the content of the TV broadcast being recorded changes into a commercial message (CM) portion (which will be referred to herein as a "non-content portion"), or vice versa (see Japanese Patent Application Laid-Open Publication No. 2007-74040, for example).

When playing back such a content with editing points recorded, the user may start playing back the content anywhere he or she likes by specifying an appropriate editing point on the content with a remote, for example.

Another technique for sensing a change between a content portion and a non-content portion uses an audio signal. Specifically, according to such a technique, on finding the level of the audio signal lower than a predetermined one, the recorder determines that this is where the content and non-content portions change and puts an editing point there. And then the recorder stores data about the editing point along with the content itself. In this manner, editing points can be put on a content being recorded.

The audio signal representing broadcast data, however, is usually subjected to compression and has normally been transformed into frequency based data by discrete cosine transform (DCT), for example. That is why to detect the level of such an audio signal, the audio data should be subjected to an inverse discrete cosine transform (IDCT) or any other appropriate transformation for transforming the frequency based data into time based data. For that reason, if it is determined, by the level of an audio signal, where to put the editing points, it will take a lot of time to get the transformation done, and therefore, the editing points cannot be placed quickly.

It is therefore an object of the present invention to provide a video editing system that can determine where to put such editing points more quickly.

### SUMMARY OF THE INVENTION

A video editing system according to the present invention is designed to write editing point information about a point on a time series where a content portion and a non-content portion of AV data change from one into the other, along with the AV data itself, on a storage medium. The audio data of the AV data yet to be decoded includes a parameter representing how much the volume of the audio data will be when decoded. The system comprises a detecting section for locating, based on the parameter, a point where the content portion and the non-content portion change, thereby generating the editing point information representing such a change point, and a writing section for writing the editing point information, along with the AV data, on the storage medium.

In one preferred embodiment, the detecting section stores at least one range, in which the parameter has a value that is equal to or smaller than a threshold value, as a candidate range in which the change point could be located, and sets the change point by choosing from the at least one candidate range.

In this particular preferred embodiment, the detecting section changes the threshold values as the value of the parameter varies.

In another preferred embodiment, the detecting section sets the change point based on the interval between the candidate ranges.

In still another preferred embodiment, if the audio data has a plurality of audio channels, then the detecting section locates the change point by using the parameter in only one of those audio channels, without using the parameter in any other audio channel.

In yet another preferred embodiment, the detecting section locates the change point by using the parameter of audio data falling within only a particular frequency range, which forms part of the audible range for human beings, without using the parameter of audio data in any other frequency range.

In a specific preferred embodiment, the parameter is global_gain defined by MPEG (Moving Picture Experts Group)-2 AAC (Advanced Audio Coding).

In another specific preferred embodiment, the parameter is scalefactor defined by MPEG (Moving Picture Experts Group)-AUDIO.

According to the present invention, when broadcast data needs to be recorded, a change point between a content portion and a non-content portion can be located quickly and an editing point can be put at that change point instantly.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

FIG. **1** illustrates a video editing system as a specific preferred embodiment of the present invention.

FIGS. **2A** and **2B** illustrate arrangements of packets in a TS and a partial TS, respectively, in a preferred embodiment of the present invention.

FIG. **3** illustrates an AAC encoded stream according to a preferred embodiment of the present invention.

FIG. **4** illustrates how global_gain changes when an audio gap is found in a preferred embodiment of the present invention.

FIG. **5** is a flowchart showing the procedure of audio gap finding processing according to a preferred embodiment of the present invention.

FIG. **6** shows an exemplary data structure for a program map table according to a preferred embodiment of the present invention.

FIG. **7** is a flowchart illustrating the procedure of calculating an audio gap finding threshold value according to a preferred embodiment of the present invention.

FIG. **8** illustrates the distribution of audio gaps in a preferred embodiment of the present invention.

FIG. **9** shows an exemplary audio data structure according to the MPEG-AUDIO Layer-1 standard in a preferred embodiment of the present invention.

FIG. **10** illustrates how audio data is decoded in a preferred embodiment of the present invention.

### DETAILED DESCRIPTION OF PREFERRED EMBODIMENTS

Hereinafter, preferred embodiments of a video editing system according to the present invention will be described. In the following description of preferred embodiments, the TV broadcast data is supposed to be compressed and encoded compliant with the MPEG (Moving Picture Experts Group)-2 standard. Also, audio is supposed to be encoded compliant with MPEG-2 AAC (Advanced Audio Coding). However, these coding methods are just examples and the present invention is in no way limited to those examples.

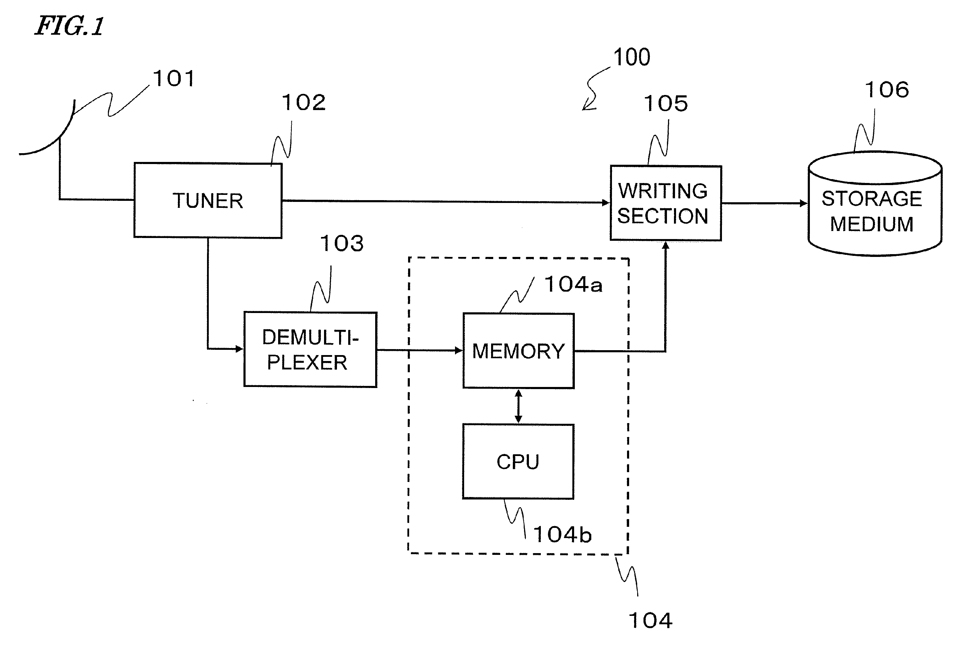

FIG. **1** illustrates a video editing system **100** as a specific preferred embodiment of the present invention. The video editing system **100** includes an antenna **101,** a tuner **102,** a demultiplexer **103,** a CM detecting section **104,** and a writing section **105.** The CM detecting section **104** includes a memory **104a** and a CPU **104b.** The storage medium **106** on which data is stored may be either a hard disk or any other storage device built in the system **100** or a removable storage medium such as an optical disc or a semiconductor memory card.

When a broadcast signal is received at the antenna **101,** a channel is selected with the tuner **102,** thereby outputting a partial TS (transport stream) including video PES (packetized elementary stream) packets and audio PES packets.

The demultiplexer **103** receives the partial TS from the tuner **102,** extracts only the audio PES packets from it and then outputs them.

The CM detecting section **104** locates, using the audio PES packets supplied from the demultiplexer **103,** a point where a content portion and a non-content portion that are continuous with each other on the time series change from one into the other (i.e., a point where an editing point needs to be put), and outputs editing point information about a point where the editing point needs to be placed to the writing section **105.** The change point is a point on the time series where the content portion and the non-content point change. The editing point information may include time information about the change point. The time information may be a PTS (presentation time stamp) or a DTS (decoding time stamp), for example. However, these are just examples. And any other sort of editing information may also be used as long as the change point can be located.

The memory **104a** of the CM detecting section **104** stores not only the audio PES data supplied from the demultiplexer **103** but also the results of computations done by the CPU **104b,** and outputs editing point information to the writing section **105.** The CPU **104b** reads the data stored in the memory **104a** and carries out various kinds of computations. It will be described in detail later exactly how the CM detecting section **104** determines the point where the editing point should be put.

The writing section **105** writes not only the partial TS supplied from the tuner **102** but also the editing point information provided by the CM detecting section **104** on the storage medium **106.**

The storage medium **106** may be an HDD, a DVD or a BD and stores the partial TS or the editing point information that has been written by the writing section **105.**

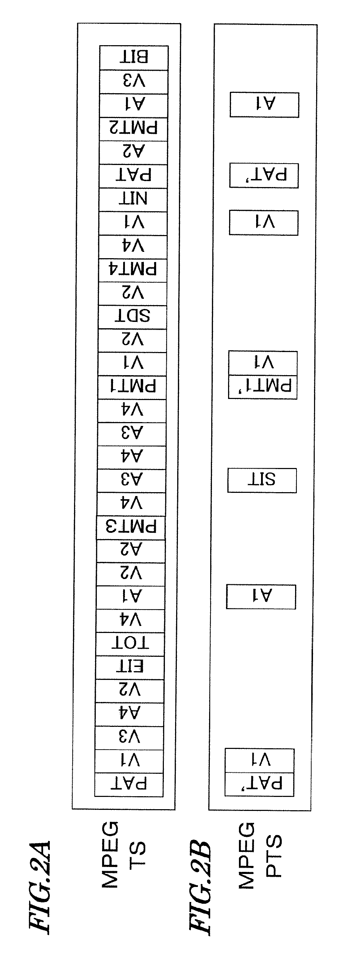

Next, the partial TS will be described. The tuner **102** gets a transport stream (TS) from the TV broadcast signal received and then generates a partial TS from the TS. FIG. **2A** illustrates an arrangement of packets in a TS, while FIG. **2B** illustrates an arrangement of packets in a partial TS. In FIGS. **2A** and **2B****,** each box with PAT, PMT1, V1, or A1 sign, for example, corresponds to a single packet and Vn and An (where n is 1, 2, 3 or 4) indicate that the packet includes the video or audio data of a program #n.

The tuner **102** extracts video and audio packets **V1** and **A1** associated with the selected program #1 from the TS shown in FIG. **2A** and also extracts a PAT (program association table) and a PMT1 (program map table 1), which are tables containing program-related information, and rewrites their contents so that those tables are compatible with the partial TS. As a result, PAT' and PMT1' are arranged in the partial TS. Also, in the partial TS, in place of the service information (SI) included in the TS, stored is selection information table (SIT) that contains information about only a selected program.

In this preferred embodiment, an audio PES packet such as the packet **A1** includes data that has been encoded compliant with the MPEG-2 AAC standard and also includes global_gain as a piece of gain information. According to this preferred embodiment, the change point between a content portion and a non-content portion is located by using that global_gain.

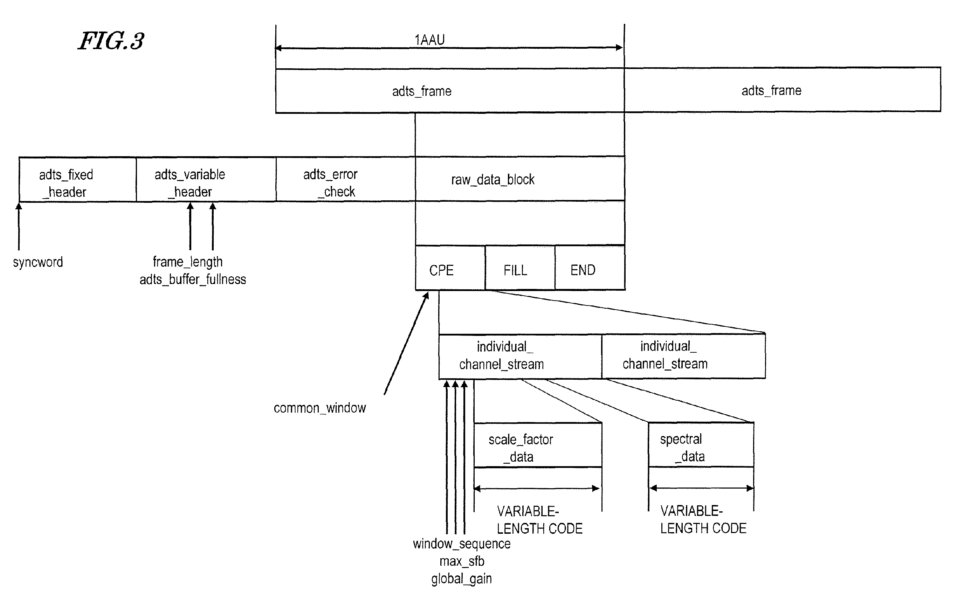

Next, global_gain will be described with reference to FIG. **3**. The AAC encoded stream shown in FIG. **3** is supposed to be compliant with the ADTS (audio data transport stream) format that is used in digital broadcasting. An ADTS can be classified into a number of units called "AAU (audio access units)". An AAU can be obtained by extracting data portions from audio PES packets.

In FIG. **3**, adts_frame corresponding to one AAU includes adts_fixed_header, adts_variable_header, adts_error_check, and raw_data_block.

The raw_data_block is comprised of multiple constituent elements, which are simply called "elements". Examples of those elements that form one raw_data_block include CPE (channel pair element) for L/R channels, FILL (fill element) to insert stuffing bytes, and END (term element) that indicates the end of one AAU. The raw_data_block has such a structure in a situation where there are two (i.e., L and R) audio channels.

The CPE includes common_window, which is a piece of information representing a common window function for use in both of L and R channels, and two individual_channel_streams as channel-by-channel information.

Each individual_channel_stream includes window_sequence, which is a piece of information representing sequence processing on the window function, max_sfb, which is a piece of information about band limitation, global_gain, which is a piece of information representing the overall level of the frequency spectrum, scale_factor_data, which is a piece of information representing upscale and down-scale parameters, and spectral_data, which is a piece of information representing quantization data.

In outputting audio data, a frequency conversion is carried out using global_gain, scale_factor_data and spectral_data, thereby obtaining the audio data.

The global_gain is a piece of information representing the overall level of the frequency spectrum and therefore represents an approximate value of the volume of an audio signal decoded. That is why the global_gain can be used as a parameter representing the volume.

Hereinafter, it will be described exactly how the CM detecting section **104** determines where to put the editing point.

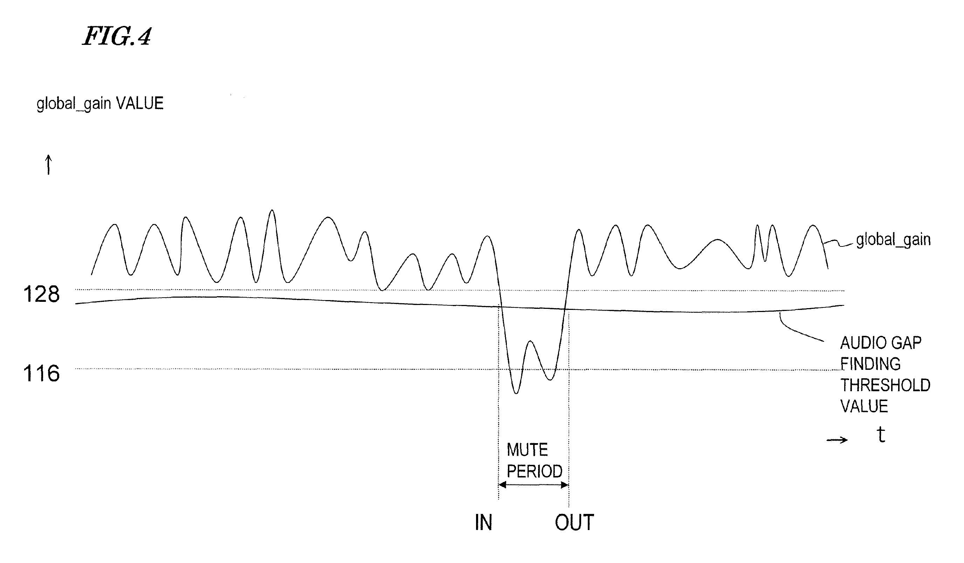

FIG. **4** illustrates how the global_gain of the audio PES packet changes when an audio gap is found. In FIG. **4****,** the ordinate represents the global_gain value and the abscissa represents the time.

The global_gain value has been detected by the CM detecting section **104.** An audio gap finding threshold value is a threshold value for finding the audio gap and determined based on the global_gain value. It will be described in further detail later exactly how to set the threshold value.

Also, the mute period is a period in which the global_gain value detected by the CM detecting section **104** is relatively small. And this mute period corresponds to the audio gap. The point in time when the global_gain value becomes smaller than the audio gap finding threshold value will be referred to herein as an "IN point" and the point in time when the global_gain value becomes greater than the audio gap finding threshold value will be referred to herein as an "OUT point".

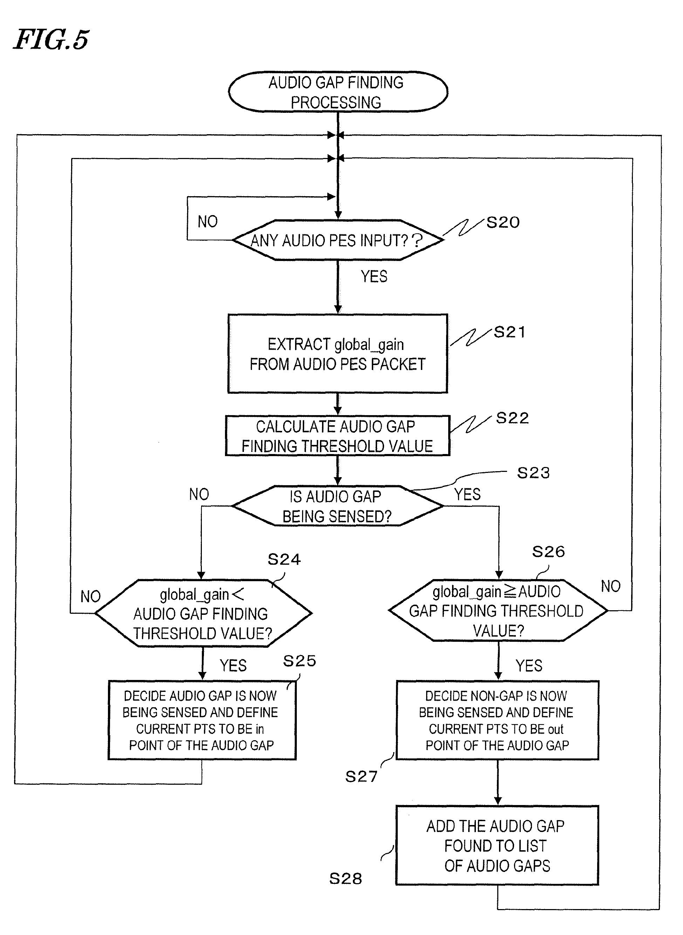

FIG. **5** is a flowchart showing the procedure of audio gap finding processing. First, in Step **S20,** the system gets ready for the input of any audio PES packet from the demultiplexer **103** to the memory **104a** and determines whether or not any packet has come yet. If the answer is YES (i.e., if any audio PES packet has gotten stored in the memory **104a),** the CPU **104b** extracts global_gain in Step **S21** from the audio PES packet that is now stored in the memory **104a.**

If the TV broadcast received has multiple audio channels, then the global_gain value that has been detected earliest is extracted and not every channel is analyzed. For example, if the broadcast received is a stereo broadcast in which there are two audio channels of R and L, only the global_gain of either the R or L channel needs to be extracted and there is no need to extract the global_gain from the other channel. Likewise, even if there are 5.1 audio channels, the global_gain has only to be extracted from one of those 5.1 channels and there is no need to extract the global_gain from any other channel. By using the global_gain of only one of multiple audio channels without extracting the global_gain from any other channel in this manner, the complexity of the computation processing can be reduced and the audio gap can be found more quickly.

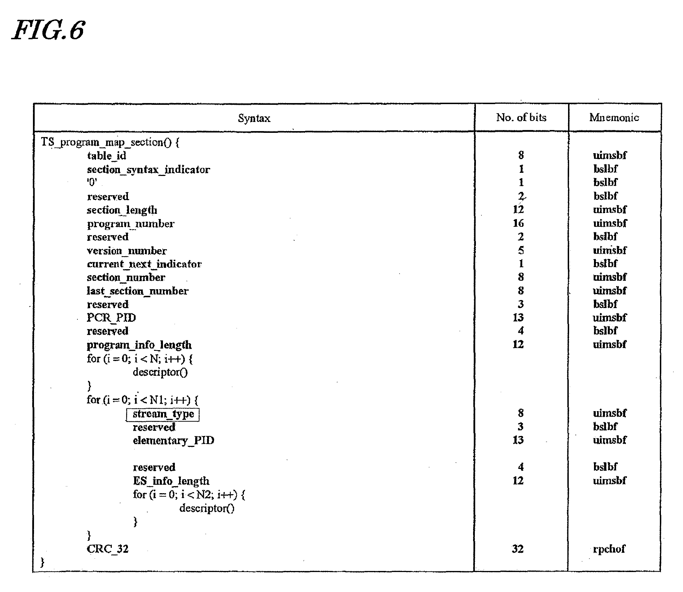

FIG. **6** shows an exemplary data structure of the program map table **PMT1'** in the partial TS. This program map table includes stream_type, which is a piece of information representing the type of the given stream data. By reference to this stream_type, it can be determined whether the given stream data is a video stream or an audio stream.

Alternatively, the global_gain of one of those audio channels, of which the number represented by the stream_type is the smallest, may be used for finding the audio gap. As that audio channel is highly likely to be a main audio channel, the audio gap can be found accurately. Still alternatively, if the audio channel that has been detected earlier than any other channel is used, the audio gap can be found quickly.

In the example described above, the global_gain of only one of multiple audio channels is supposed to be used to find the audio gap. If necessary, however, the global_gain values of two or more audio channels may also be used to find the audio gap.

Also, if there are 5.1 channels, the audio gap could be found more accurately by using the global_gain of a front audio channel rather than that of a rear audio channel. That is why the global_gain of a front audio channel is preferred to that of a rear audio channel.

Now take a look at FIG. **5** again. In the next processing step **S22,** the CPU **104b** calculates the audio gap finding threshold value based on the global_gain value extracted. It will be described in detail later exactly how to calculate the audio gap finding threshold value.

The CPU **104b** stores sensing status information, indicating whether an audio gap is being sensed or not, in the memory **104a.** And if the sensing status information indicates otherwise (i.e., a non-gap portion is now being sensed) in Step **S23,** then the process advances to Step **S24.**

In Step **S24,** the CPU **104b** determines whether or not the global_gain value is less than the audio gap finding threshold value. If the answer is NO (i.e., if the global_gain value is equal to or greater than the audio gap finding threshold value), then the process goes back to the processing step **S20.** On the other hand, if the global_gain value is found smaller than the audio gap finding threshold value (i.e., if the answer to the query of Step **S24** is YES), then the CPU **104b** defines the sensing status information to be "audio gap is now being sensed". At the same time, the CPU **104b** generates audio gap information in Step **S25** with the PTS of the audio PES packet at that timing associated with the IN point of the audio gap, and then the process goes back to the processing step **S20.**

On the other hand, if the sensing status information indicates in Step **S23** that an audio gap is now being sensed, then the process advances to Step **S26,** in which the CPU **104b** determines whether or not the global_gain value is equal to or greater than the audio gap finding threshold value. If the answer is NO (i.e., if the global_gain value is smaller than the audio gap finding threshold value), then the process goes back to the processing step **S20.** Meanwhile, if the answer is YES (i.e., if the global_gain value is equal to or greater than the audio gap finding threshold value), then the CPU **104b** defines the sensing status information to be "non-gap is being sensed". At the same time, the CPU **104b** generates audio gap information in Step **S27** with the PTS of the audio PES packet at that timing associated with the OUT point of the audio gap. Next, the CPU **104b** stores audio gap information about the IN and OUT points in the memory **104a** in Step **S28** and then the process goes back to the processing step **S20.** The audio gap information is added to a list of audio gaps in the memory **104a.**

The list of audio gaps includes a group of audio gaps that have been found as a result of the audio gap finding processing described above. And that list is used in determining whether a given point belongs to a content portion or a non-content portion as will be described later. Each of those audio gaps that have been added to the list of audio gaps represents a period where a change point between the content portion and the non-content portion is potentially located.

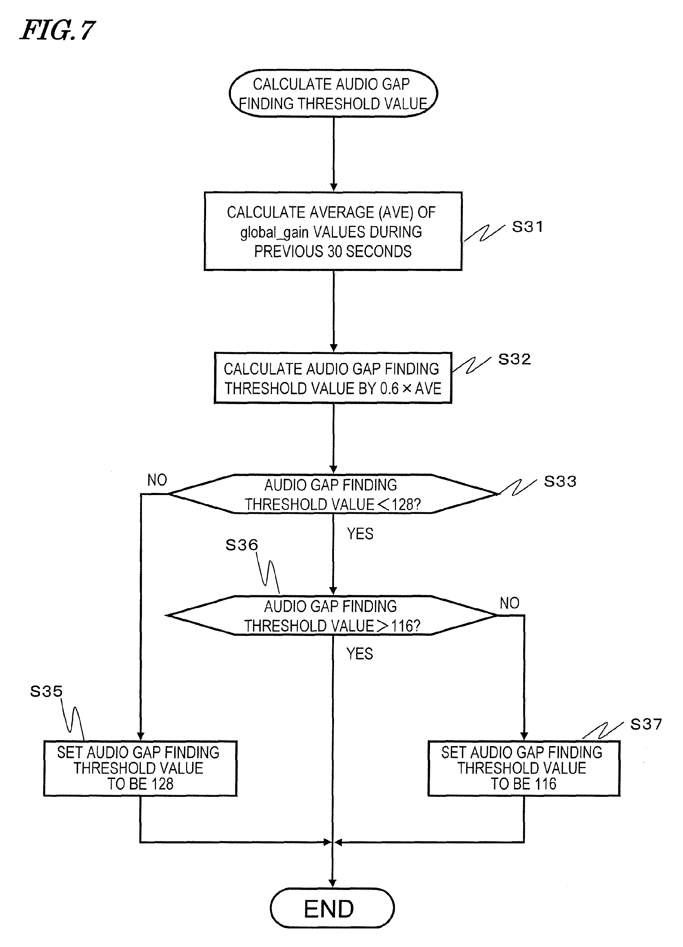

Hereinafter, it will be described with reference to FIG. **7** how to calculate the audio gap finding threshold value. The memory **104a** stores the global_gain values of at least the previous 30 seconds. The CPU **104b** calculates in Step **S31** the average of the global_gain values during the previous 30 seconds that are stored in the memory **104a.** Next, the CPU **104b** multiplies the average global_gain thus calculated by 0.6, thereby calculating an audio gap finding threshold value in Step **S32.**

Subsequently, in Step **S33,** the CPU **104b** determines whether or not the audio gap finding threshold value thus calculated is smaller than 128. If the answer is NO (i.e., if the audio gap finding threshold value thus calculated is equal to or greater than 128), the CPU **104b** sets the audio gap finding threshold value to be 128 in Step **S35.** Meanwhile, if the answer to the query of Step **S33** is YES, the CPU **104b** determines in the next processing step **S36** whether or not the audio gap finding threshold value calculated is greater than 116. If the answer is NO (i.e., if the audio gap finding threshold value thus calculated is equal to or smaller than 116), the CPU **104b** sets the audio gap finding threshold value to be 116 in Step **S37.** In this manner, it is possible to prevent the audio gap finding threshold value from being too large or too small. And if the audio gap finding threshold value calculated is greater than 116 but smaller than 128 (i.e., if the answers to the queries of Steps **S33** and **S36** are both YES), then the threshold value calculated is used as it is as the audio gap finding threshold value.

The average of the global_gain values usually changes according to the channel or program selected. That is why by setting the audio gap finding threshold value adaptively based on the average of the global_gain values (i.e., by changing the audio gap finding threshold values with a variation in global_gain value) as is done in this preferred embodiment, the audio gap finding threshold value can be set appropriately. As a result, the audio gap can be found more accurately based on the audio PES packet.

If the non-content portions of a TV broadcast are CM, for example, each of those non-content portions will normally last either 15 seconds or a multiple of 15 seconds. Thus, according to the present invention, the change point between the content and non-content portions is detected by paying special attention to that periodicity.

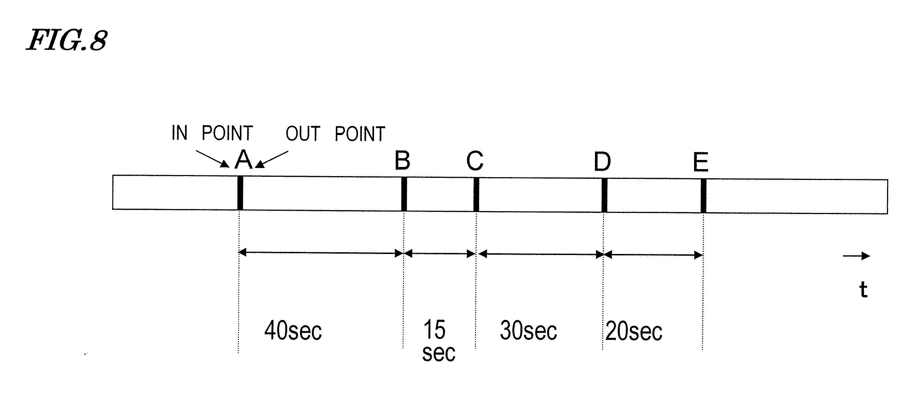

FIG. **8** illustrates the distribution of audio gaps that have been found while a TV broadcast is being recorded. In FIG. **8****,** t represents the time. In the example illustrated in FIG. **8****,** audio gaps **A** through **E** to be added to the list of audio gaps in the memory **104a** are shown. Any of these audio gaps **A** through **E** potentially has a change point between the content and non-content portions.

In this example, the intervals between the audio gaps **A** and **B,** between the audio gaps **B** and **C,** between the audio gaps **C** and **D,** and between the audio gaps **D** and **E** are 40, 15, 30 and 20 seconds, respectively.

Thus, the CPU **104b** determines that there should be non-content portions in the interval between the audio gaps **B** and **C** and in the interval between the audio gaps **C** and **D,** and also determines that there should be content portions in the interval between the audio gaps **A** and **B** and in the interval between the audio gaps **D** and **E.**

Based on these decisions, the CPU **104b** concludes that the audio gaps **B** and **D** have change points between the content and non-content portions but that the other audio gaps **A**, **C** and **E** have nothing to do with the content/non-content change points.

Thus, the CPU **104b** generates editing point information by defining the midpoint between the respective PTS of the IN and OUT points of the audio gap **B** and the one between those of the IN and OUT points of the audio gap **D** to be editing points, and then outputs that information to the writing section **105** by way of the memory **104a.** In response, the writing section **105** writes the editing point information on the storage medium **106.**

The video editing system **100** of the preferred embodiment described above sets the editing points with the length of the interval between a pair of audio gaps taken into account. As a result, the editing points can be set more accurately.

Also, the video editing system **100** of this preferred embodiment locates the change point between content and non-content portions by using the global_gain value of an audio PES packet yet to be decoded without decoding the audio PES packet into an audio signal. Since no decoding process is performed, the content/non-content change point can be located much more quickly.

In the preferred embodiment described above, the audio gap finding threshold value is defined by calculating the average of the global_gain values during the previous 30 seconds. However, the audio gap finding threshold value does not always have to be defined by such a method. Alternatively, the audio gap finding threshold value could also be received along with a TV broadcast. Still alternatively, the video editing system **100** could accumulate the audio gap finding threshold values. In the latter case, the audio gap finding threshold values may be stored on a channel-by-channel basis.

Also, in the preferred embodiment described above, the content and its editing point information are supposed to be stored on the same storage medium **106.** However, they may also be stored on physically different media. For example, the content may be stored on an HDD and the editing point information may be stored on a flash memory. In that case, the HDD and the flash memory are equivalent to the storage medium **106.**

It should be noted that if either the content portion itself or the non-content portion itself included a mute period, then the editing point could be set where there is not any change point. Nevertheless, when a content portion and a non-content portion change from one into the other, the mute period usually lasts less than one second. Considering this fact, if the period between the IN and OUT points lasts one second or more, then it may be determined that there is no change point within that period. Then, the editing point can be set more accurately.

Furthermore, in the preferred embodiment described above, the given period is determined to belong to a non-content portion if its duration is a multiple of 15 seconds. However, this decision may naturally be made according to the duration of a current non-content actually on the air. Thus, the duration may also be a multiple of 20 seconds or 25 seconds.

Furthermore, in the preferred embodiment described above, the broadcast video data is supposed to be encoded compliant with the MPEG-2 standard and the audio data is supposed to be encoded compliant with the MPEG-2 AAC standard. However, the broadcast video and audio data may also be encoded by any other coding method. For example, the audio gap may be found by extracting a parameter, which can be used to calculate the volume of an audio signal or an approximate value thereof, from the audio data that has been encoded compliant with the MPEG-1 standard or the AC-3 (Audio Code number 3) standard. In any case, according to a coding method that uses a parameter for calculating the volume of an audio signal or an approximate value thereof without making complicated computations (just like the global_gain of the AAC), the effect of the present invention described above can also be achieved by using such a parameter.

For example, if the audio data has been encoded by MPEG-AUDIO Layer-1 (or Layer-2), then scalefactor may be used as a parameter for calculating an approximate value of the volume of an audio signal.

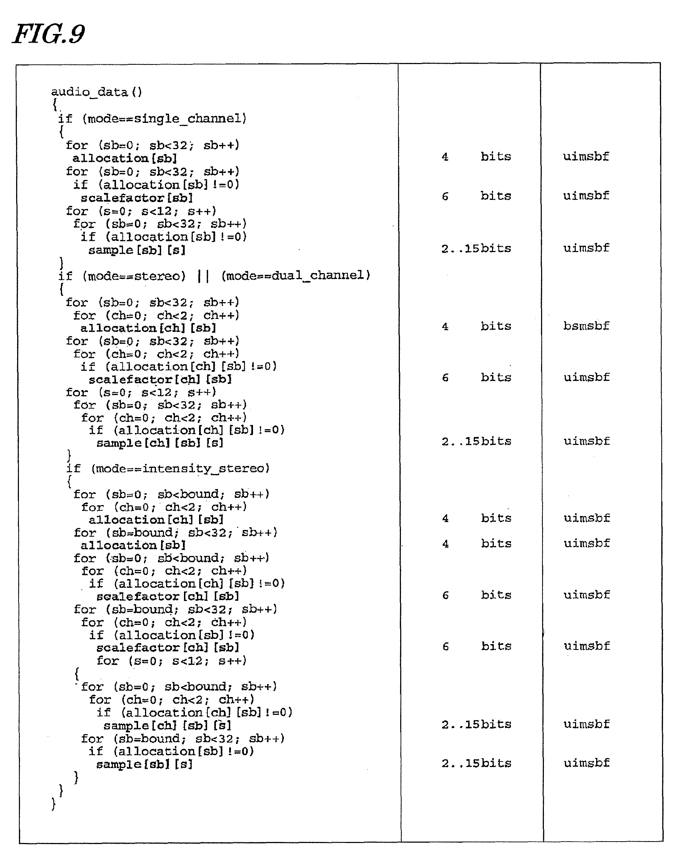

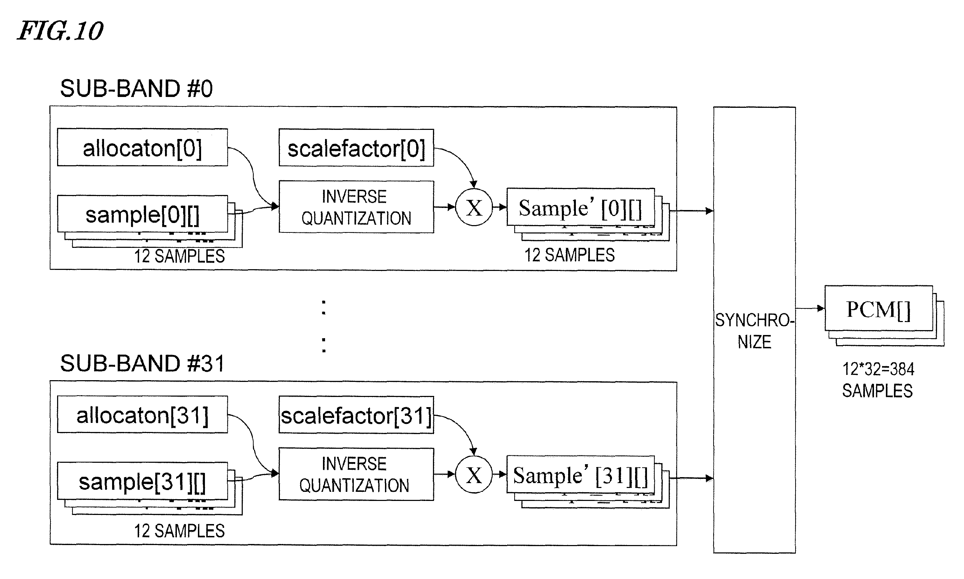

FIG. **9** shows an exemplary audio data structure according to the MPEG-AUDIO Layer-1 standard, and FIG. **10** illustrates how audio data is decoded compliant with the MPEG-AUDIO Layer-1 standard.

According to the MPEG-AUDIO Layer-1 standard, a data stream is divided into 32 sub-bands #0 through #31 on a predetermined frequency range basis. And each of those sub-bands includes quantized sample data "sample", the number of bits allocated ("allocation") to that "sample", and a decoding gain coefficient "scalefactor".

The decoding processing may be performed as follows. First of all, data that has been dequantized based on "allocation" and "sample []" is multiplied by "scalefactor" on a sub-band basis, thereby generating intermediate data "sample' []". Next, synchronization processing is carried out on "sample' []" of the respective sub-bands, thereby synthesizing those sub-bands together and obtaining PCM data.

Each "scalefactor" includes the amplitude information of its associated sub-band and can be used to calculate an approximate value of the volume of an audio signal just like the global_gain. That is why the audio gap can also be found just as described above by using the "scalefactor".

By using the "scalefactor" as described above, the audio gap can be found without performing any dequantization or synchronization processing. As a result, the audio gap can be found more quickly with the computational complexity reduced significantly. Likewise, even when the global_gain described above is used, the audio gap can also be found without dequantization or synchronization, which would reduce the computational complexity and speed up the audio gap finding significantly.

Optionally, the audio gap may be found by using the scalefactor of audio data falling within a particular frequency range. For example, if the scalefactor is extracted from only sub-bands associated with the frequency range (e.g., from 100 Hz to 10 kHz) of audio that can easily reach a person's ears, not from a sub-band associated with any other frequency range, the audio gap can be found more quickly with the amount of data used and the computational complexity both cut down significantly. Generally speaking, most of the audio data on the air is distributed within an easily audible frequency range for human beings. That is why even if the scalefactor extracted from only sub-bands associated with a particular frequency range is used as described above, the audio gap can still be found accurately. It should be noted that the frequency range mentioned above is just an example. Rather the frequency range may be defined anywhere else as long as it forms at least part of the audible range (20 Hz to 20 kHz) to human ears.

Consequently, by using only a parameter of audio data falling within a particular frequency range that forms part of a person's audible range, not a parameter of audio data within any other frequency range, as described above, the audio gap can be found much more quickly with the computational complexity cut down significantly.

A video editing system according to the present invention can be used in digital TV sets, recorders, and any other device that can record a TV broadcast.

While the present invention has been described with respect to preferred embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

This application is based on Japanese Patent Applications No. 2008-213778 filed on August 22, 2008 and No. 2009-183742 filed on August 6, 2009, the entire contents of which are hereby incorporated by reference.

## Claims

1. A video editing system for writing editing point information about a point on a time series where a content portion and a non-content portion of AV data change from one into the other, along with the AV data itself, on a storage medium,
wherein the audio data of the AV data yet to be decoded includes a parameter representing how much the volume of the audio data will be when decoded, and
wherein the system comprises
a detecting section for locating, based on the parameter, a point where the content portion and the non-content portion change, thereby generating the editing point information representing such a change point, and
a writing section for writing the editing point information, along with the AV data, on the storage medium.

2. The video editing system of claim 1, wherein the detecting section stores at least one range, in which the parameter has a value that is equal to or smaller than a threshold value, as a candidate range in which the change point could be located, and sets the change point by choosing from the at least one candidate range.

3. The video editing system of claim 2, wherein the detecting section changes the threshold values as the value of the parameter varies.

4. The video editing system of claim 2, wherein the detecting section sets the change point based on the interval between the candidate ranges.

5. The video editing system of claim 1, wherein if the audio data has a plurality of audio channels, then the detecting section locates the change point by using the parameter in only one of those audio channels, without using the parameter in any other audio channel.

6. The video editing system of claim 1, wherein the detecting section locates the change point by using the parameter of audio data falling within only a particular frequency range, which forms part of the audible range for human beings, without using the parameter of audio data in any other frequency range.

7. The video editing system of claim 1, wherein the parameter is global_gain defined by MPEG (Moving Picture Experts Group)-2 AAC (Advanced Audio Coding).

8. The video editing system of claim 1, wherein the parameter is scalefactor defined by MPEG (Moving Picture Experts Group)-AUDIO.
